(19) Europäisches Patentamt / European Patent Office / Office européen des brevets

(11) **EP 3 702 828 A1**

(12) **EUROPEAN PATENT APPLICATION**
published in accordance with Art. 153(4) EPC

(43) Date of publication:
**02.09.2020 Bulletin 2020/36**

(51) Int Cl.:
**G02B 27/02** *(2006.01)*          **H04N 5/64** *(2006.01)*

(21) Application number: **18869932.6**

(86) International application number:
**PCT/JP2018/033872**

(22) Date of filing: **12.09.2018**

(87) International publication number:
**WO 2019/082540 (02.05.2019 Gazette 2019/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2017 JP 2017206445**

(71) Applicant: **Shimadzu Corporation Kyoto-shi, Kyoto 604-8511 (JP)**

(72) Inventor: **TANAKA, Masato Kyoto-shi Kyoto 604-8511 (JP)**

(74) Representative: **Mewburn Ellis LLP Aurora Building Counterslip Bristol BS1 6BX (GB)**

(54) **HEAD-MOUNTED TYPE DISPLAY DEVICE**

(57)     In an HMD for aircraft, a visor (10) has toroidally-shaped portions (10L, 10R) respectively corresponding to left and right eyes (EL, ER) of a user (H), and the toroidally-shaped portions (10L, 10R) are connected at a substantially central part between the eyes of the user (H). The toroidally-shaped portions (10L, 10R) are aspherical shapes having a smaller curvature in a vertical direction than in a horizontal direction. Two sets of an image display section (11) and a projection optical system (12) are provided independently corresponding to the left and right toroidally-shaped portions (10L, 10R). Due to the difference in curvature, a difference in optical power caused, for example, by a difference in incident angle on the reflecting surface (10a) is eliminated. This lessens astigmatism and allows an image with a wider visual field to be displayed. An intermediate image is formed in both the vertical and horizontal directions within the projection optical system (12) or in the middle of an optical path from the projection optical system (12) to the reflecting surface (10a). This increases the degree of freedom of the arrangement of optical elements and allows for the reduction in size and weight of the device.

Fig. 2A

EP 3 702 828 A1

# Fig. 2B

**Description**

TECHNICAL FIELD

The present invention relates to a display device for displaying image information or similar information as a virtual image in front of the eyes of a user, and more specifically, to a head mounted display device to be mounted on the head of a user when in use.

BACKGROUND ART

In recent years, a type of display device which is generally called the "helmet mounted display" (which is hereinafter abbreviated as the "HMD") has been used in the operation of a helicopter, airplane or similar type of aircraft. In an HMD, an image displayed on a display element, such as a cathode ray tube (CRT) or liquid crystal display (LCD), is projected onto a visor (shield) attached to the helmet which the pilot wears on his/her head and is reflected toward the pilot to create a display image in the form of a virtual image in front of the eyes of the pilot.

Unlike the commonly used helmets for two-wheeled vehicles, the helmets for aircraft (mainly military aircraft) normally have a spherical visor. A likely reason for this design is that the spherical shape is the easiest to fabricate in the case of creating a visor having a high level of dimensional accuracy, i.e. the smallest possible amount of distortion or the like. Another possible reason is that the spherical shape makes it easier to ensure a high level of strength against a large external force due to acceleration. Therefore, the optical system in the HMD for aircraft is configured to reflect display light on a spherical visor.

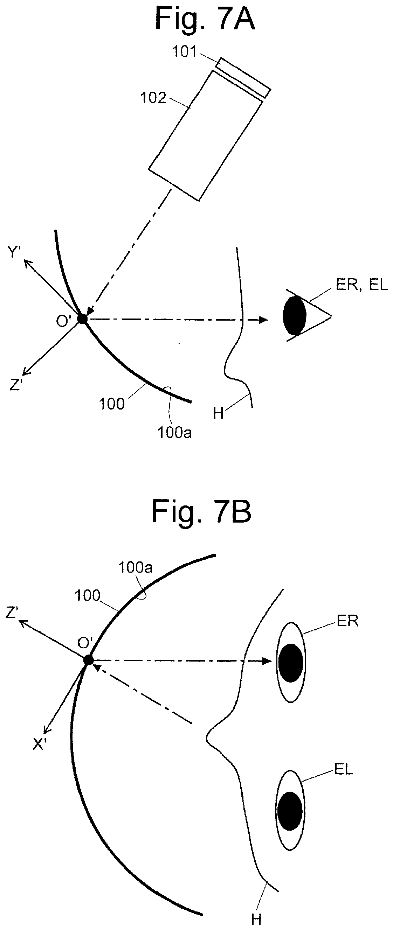

Figs. 7A and 7B are schematic configuration diagrams of an optical system including a visor in a conventional HMD. Specifically, Fig. 7A is a schematic vertical-sectional view, and Fig. 7B is a schematic horizontal-sectional view.

The spherical visor 100 has a sectional shape that is a cutout of a portion of a circle. The visor 100 is attached to a helmet (not shown) in a vertically slidable manner. The helmet covers the head of the user H, leaving an open area in front of the face of the user H. The visor 100 has a reflection surface 100a on its inner surface which faces the user H. The reflection surface 100a has a coating layer which reflects a portion of the display light as well as allows a portion of light from outside to pass through.

The display light forming a display image and emitted from an image display section 101 goes through a projection optical system 102 and is projected onto a predetermined area of the reflection surface 100a of the visor 100. The light is reflected there and reaches the eyes EL and ER of the user H. A portion of the light coming from outside and passing through the visor 100 also reaches the eyes EL and ER of the user H. Consequently, a virtual image originating from the display image is superposed on a view of the external scene in front of the eyes of the user H (for example, see Patent Literature 1).

As described in Patent Literature 1, the projection optical system 102 is normally configured to collimate the display light emitted from the image display section 101 and project the collimated light onto the reflection surface of the visor 100. The optical axis of the bundle of the display light is indicated by the long dashed short dashed line in Figs. 7A and 7B.

In such a type of HMD, as shown in Fig. 7A, the reflection surface 100a of the visor 100 having a cross section shaped a partial circle is positioned so that the upper portion of the visor 100 is inclined outward with respect to an axis which horizontally lies along the line of sight of the user H. Such a positioning inevitably causes astigmatism; the larger the distance from the optical axis to the position at which the display light passes, i.e. the larger the distance from the center of the display image is, the greater the influence of the astigmatism becomes, causing the image to be blurred. The amount of astigmatism particularly increases if the visual field of the display image is expanded. Accordingly, it has been difficult to expand the visual field of the display image in the conventional HMD having the previously described configuration.

CITATION LIST

PATENT LITERATURE

Patent Literature 1: JP 2015-154420 A
Patent Literature 2: JP H10-504115 A

SUMMARY OF INVENTION

TECHNICAL PROBLEM

In general, an HMD for an aircraft often displays important information for the user to operate the aircraft. Therefore, a high level of visibility is required for a display image with a wide visual field. It is difficult for the conventional aforementioned HMDs to satisfy such a requirement.

The present invention has been developed to solve such a problem. In a head mounted display device for projecting a display image onto a visor placed in front of the eyes of a user, the present invention is primarily aimed at reducing astigmatism so that the visual field of the display image can be expanded and a high level of visibility can be realized.

SOLUTION TO PROBLEM

In order to solve the above problem, the present invention provides a head mounted display device including a support section mounted on a head of a user; a visor supported by the support section so as to be disposed in front of eyes of the user; a display section that forms a display image; and a projection optical system that projects display light containing information of the display image formed by the display section onto reflecting surfaces of the visor, wherein a virtual image based on the display image is created so as to be superposed on a view of an external scene visible through the visor, the reflecting surfaces of the visor are aspherical surfaces that bulge outward independently corresponding to the left and right eyes of the user and are connected to each other between the left and right eyes of the user, and two sets of the display section and the projection optical system are respectively provided corresponding to the left and right reflecting surfaces of the visor.

In the head mounted display device according to the present invention, the support section is, for example, a helmet or a headgear.

As described in Patent Literature 1, a visor of a conventional typical head mounted display device has a spherical shape having a center on a vertical line drawn at a midpoint between left and right eyes of a user facing forward horizontally. On the other hand, Patent Literature 2 discloses a head mounted display device that uses a coaxial optical system that combines a planar beam splitter and a visor having left and right independent spherical reflecting surfaces corresponding to left and right eyes. Such a configuration in which reflecting surfaces are provided corresponding to left and right eyes is advantageous in widening a visual field. However, according to the configuration of Patent Literature 2, in which two elements, a visor and a beam splitter, exist in front of the eyes, visibility of the outside scene decreases. Furthermore, the beam splitter reflects display light and allows reflected light from the visor to pass through. This results in poor light use efficiency, thereby lowering luminance of the display light. To improve the light use efficiency, a quarter wavelength plate may be added so that a polarization property thereof is utilized. However, this increases the number of elements existing in front of the eyes, thereby further lowering visibility of the outside scene.

On the other hand, the head mounted display device according to the present invention is configured such that a visor has independent reflecting surfaces corresponding to left and right eyes of a user as in the device described in Patent Literature 2, and the reflecting surfaces each have an aspherical shape and are connected to each other between the left and right eyes. Meanwhile, a beam splitter, which is disposed in front of eyes in the conventional device, is eliminated. This reduces the number of elements existing in front of eyes. Furthermore, beams of display light emitted from respective left and right independent display sections are directed onto the reflecting surfaces for the respective eyes through respective different projection optical systems instead of dividing display light from a single display section into two light beams and directing the two light beams onto the reflecting surfaces for the respective eyes. That is, an optical path of display light from the display section to the reflecting surface of the visor on the left side is independent of an optical path of display light from the display section to the reflecting surface of the visor on the right side.

The head mounted display device according to the present invention is preferable configured such that an intermediate image is formed within the projection optical systems corresponding to the left and right reflecting surfaces or on optical paths from the projection optical systems to the corresponding reflecting surfaces; and the left and right reflecting surfaces each has an aspherical shape such that curvature in a Y'-Z' plane is smaller than curvature in a X'-Z' plane, where a central position between the left and right eyes of the user facing forward horizontally is defined as an origin O, an axis extending from the origin O toward a front side as viewed from the user is defined as a Z axis, an axis orthogonal to the Z axis and directed upward as viewed from the user is defined as a Y axis, an axis orthogonal to both the Z axis and the Y axis is defined as an X axis, and where a point at which an optical axis of an incident light beam intersects with a corresponding one of the left and right reflecting surfaces of the visor is defined as an intersection point O', a normal to the left and right reflecting surfaces at the intersection point O' is defined as a Z' axis, an axis which is orthogonal to the Z' axis and forms a plane with the Z' axis on which plane both the optical axis of the incident light beam and an optical axis of an outgoing light beam reflected on the corresponding one of the left and right reflecting surfaces and is directed toward a corresponding eye of the user are present is defined as a Y' axis, and an axis which is orthogonal to both the Y' and Z' axes is defined as an X' axis.

The left and right reflecting surfaces of the visor may preferably have an aspherical shape whose curvature in the Y'-Z' plane is smaller than the curvature in the X'-Z' plane by an amount corresponding to the difference in optical power due to a difference in the incident angle of the display light to the reflecting surface.

That is, in the head mounted display device according to the present invention, a difference in optical power between a vertical direction and a horizontal surface on each of the reflecting surfaces can be reduced by appropriately setting curvature in the vertical direction and curvature in the horizontal direction of the left and right reflecting surfaces of the visor. This allows the curvatures in the Y'-Z' and X'-Z' planes on the reflecting surface to be individually regulated so as to cancel the comparatively small difference in the optical power due to the difference in incident angle of the display light, while having an intermediate image formed in both the vertical and horizontal directions. Consequently, the amount of optical power in the optical path along which the display light reaches the eyes of the user can be roughly equalized in both the vertical and horizontal directions, so that the astigmatism which occurs in the case of a spherical reflecting surface can be reduced.

The head mounted display device according to the present invention is configured to form an intermediate image within the projection optical system or on the optical path between the projection optical system and the reflecting surface in each of the vertical and horizontal directions. According to this configuration, the light is temporarily focused before hitting the reflecting surface, and the light reflected by the reflecting surface eventually reaches the eyes of the user. Therefore, a wide visual field for observation can be realized in both the vertical and horizontal directions. Since the focusing of the beam of display light is performed within the projection optical system or on the optical path between the projection optical system and the reflecting surface, it is easy to avoid the situation in which the head or face of the user interferes with the bundle of light within the support section mounted on the head of the user. There is also the advantage that the degree of freedom of the arrangement of the optical parts constituting the projection optical system increases, which facilitates the optical design of the display section or projection optical system.

In the head mounted display device according to the present invention, the visor may preferably have a surface layer formed on its inner surface or outer surface, the surface layer being made of a material different from the base material of the visor.

According to this configuration, a reflecting surface which can realize a proper reflection of the light and transmission of the external light can be created regardless of the kind and thickness of the base material of the visor itself.

In this case, a surface layer made of a material different from the base material of the visor may be formed on a surface different from the reflecting surface so as to make the former surface function as a reflection-reducing surface. According to this configuration, a reflection-reducing surface which can decrease the reflection and suppress a ghost image can be formed regardless of the kind and thickness of the base material of the visor itself.

A support section, such as a helmet or a headgear, to which a visor is attached typically has a curved shape. Additionally, since the visor must be placed directly opposite to the face of the user, the projection optical system needs to project the display light onto the visor in an oblique direction, avoiding the head and face of the user. Due to these conditions, an image which is asymmetrically blurred is formed. Such a blurred image normally requires optical corrections.

In view of this, as one aspect of the head mounted display device according to the present invention, the projection optical systems corresponding to the left and right reflecting surfaces each include at least one reflection mirror, and the reflecting surface of the reflection mirror has an aspherical shape.

The reflecting surface of the reflection mirror in this configuration may preferably be a concave surface.

Furthermore, the reflection mirror in the aforementioned configuration may be a back-surface reflection mirror having a refracting effect in addition to the reflecting effect. In this case, the surface having the refracting effect may preferably have an aspherical shape.

In another aspect of the head mounted display device according to the present invention, the projection optical systems corresponding to the left and right reflecting surfaces each include at least one lens having a refracting effect on both surfaces, and at least one surface of the lens has an aspherical shape.

With the projection optical systems configured in the previously described manner, the asymmetrical blurring of the display image can be corrected to display a satisfactory virtual image in front of the eyes of the user. The lens in the present configuration may preferably have a refractive index nd equal to or higher than 1.58.

The use of a lens having such a high refractive index increases the optical power and allows for the use of fewer lenses, so that the weight, size, cost and other properties of the device according to the present invention can be reduced.

As a preferable aspect of the head mounted display device according to the present invention, the display section may be configured to display information in two or more colors.

With this configuration, for example, it is possible to use one color for the display of normal information and another color for the display of urgent information so as to convey information to the user in a more appropriate and reliable manner.

As one configuration of the head mounted display device according to the present invention, the display section and the projection optical system may be arranged so that the principal ray corresponding to the center of the visual field of the display light emitted from the display section is emitted at an angle which is not orthogonal to the display surface of the display section.

As another configuration of the head mounted display device according to the present invention, the display section and the projection optical system may be arranged so that the principal ray corresponding to the center of the visual field of the display light emitted from the display section is emitted from a position displaced from the center of the display surface of the display section.

By such configurations, a non-coaxial optical system in which the display light follows an optical path that avoids the head and face of the user can be realized.

The display section in the head mounted display device according to the present invention can be configured in various forms.

For example, as one aspect of the head mounted display device according to the present invention, the display section may include a transmission-type display element and a backlight illumination unit for illuminating the display element with light from behind.

As another aspect of the head mounted display device according to the present invention, the display section may include a reflection-type display element, an illumination section for emitting illumination light, and a reflection-type optical system configured to illuminate the display surface of the display element with the illumination light and to guide the light reflected by the display surface.

As still another aspect of the head mounted display device according to the present invention, the display section may include a light-emitting display element, such as an organic electroluminescent display.

This configuration does not require an illumination section for illuminating the display element. This simplifies the structure of the display section and is advantageous for reducing the size and weight of the device.

As yet another aspect of the head mounted display device according to the present invention, the display section may include a small projector and a small screen.

In this case, the display section may include a transmission-type display element and a backlight illumination unit for illuminating the display element with light from behind, where at least a portion of the backlight illumination unit is a small projector.

ADVANTAGEOUS EFFECTS OF INVENTION

In the head mounted display device according to the present invention, the amount of astigmatism which occurs on the reflecting surface of the visor is reduced, so that a display image with a wide visual field can be observed. A high level of visibility can be achieved for both the display image, which is a virtual image, and the view of the external scene. The present invention also increases the degree of freedom of the arrangement of the projection optical system for projecting a display image onto the visor as well as other design elements. This allows the device to be smaller in size and lighter in weight.

BRIEF DESCRIPTION OF DRAWINGS

Fig. 1 is a schematic external view of an HMD according to an embodiment of the present invention.

Figs. 2A and 2B are schematic configuration diagrams of an optical system in the HMD according to the present embodiment, where Fig. 2A is a schematic vertical-sectional view, and Fig. 2B is a schematic horizontal-sectional view.

Fig. 3 is a detailed configuration diagram of an optical path in the HMD according to the present embodiment.

Fig. 4 is a diagram showing a configuration example of a display section in the HMD according to the present embodiment.

Fig. 5 is a diagram showing another configuration example of the display section in the HMD according to the present embodiment.

Fig. 6 is a diagram showing another configuration example of the display section in the HMD according to the present embodiment.

Figs. 7A and 7B are schematic configuration diagrams of an optical system including a visor in a conventional HMD, where Fig. 7A is a schematic vertical-sectional view, and Fig. 7B is a schematic horizontal-sectional view.

DESCRIPTION OF EMBODIMENTS

An HMD as one embodiment of the head mounted display device according to the present invention is hereinafter described with reference to the attached drawings.

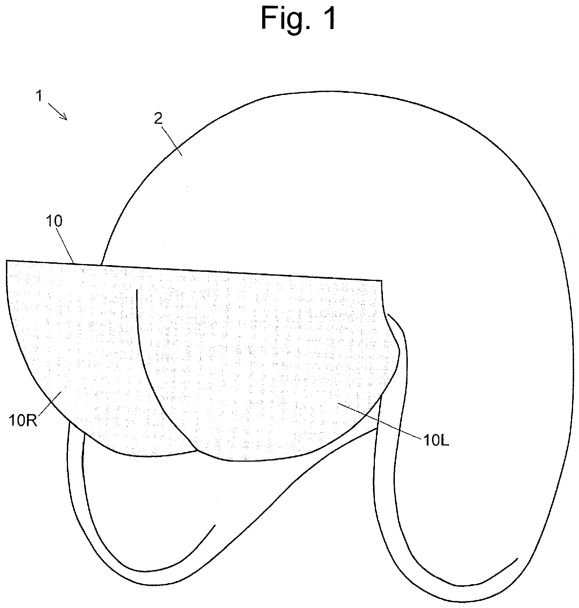

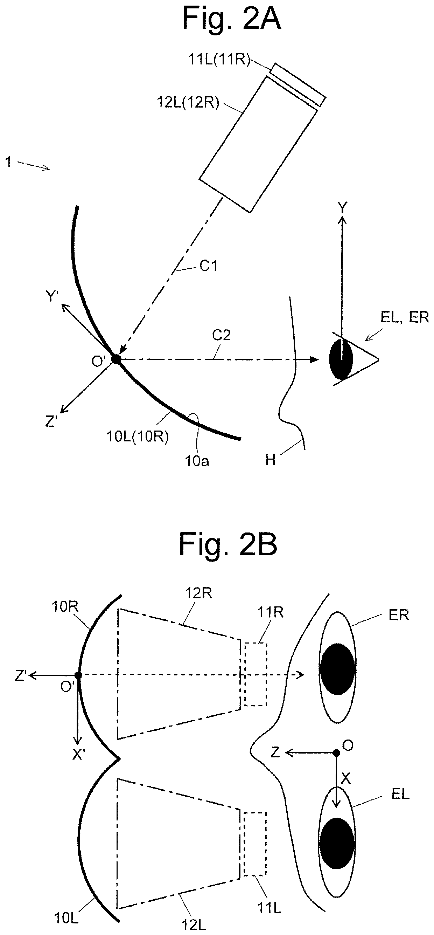

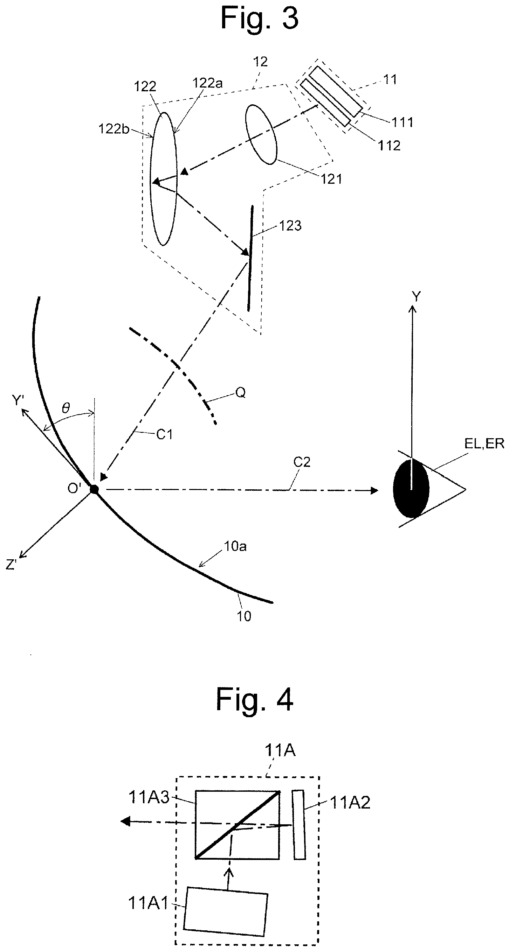

Fig. 1 is a schematic external view of the HMD according to the present embodiment. Figs. 2A and 2B are schematic configuration diagrams of an optical system in the HMD according to the present embodiment, where Fig. 2A is a schematic vertical-sectional view, and Fig. 2B is a schematic horizontal-sectional view. Fig. 3 is a more detailed configuration diagram of an optical path in Fig. 2A.

The HMD 1 according to the present embodiment is typically mounted on the head of a pilot operating an aircraft and is configured such that a visor 10 is attached to a helmet 2 that covers the head of a user H, leaving an open area in front of the face of the user H. The visor 10 is rotatable about an axis parallel to an X axis, which will be described later, and is attached to the helmet 2 so as to be slidable up and down. In addition to the helmet 2 and the visor 10, the HMD 1 according to the present embodiment includes an image display section 11 that forms a display image based on image data input from an image processing unit (not shown) and a projection optical system 12 that projects display light including the display image as information onto a predetermined region of the visor 10.

As will be described later, the visor 10 has toroidally-shaped portions 10R and 10L respectively corresponding to left and right eyes ER and EL of the user, and the toroidally-shaped portions 10R and 10L are connected to each other at a substantially central part between the left and right eyes ER and EL so as to be integral with each other. Surfaces of the toroidally-shaped portions 10R and 10L that face the user H are a reflecting surface 10a. The reflecting surface 10a has a coating layer that reflects part of display light and allows part of light from an external world to pass through. This coating layer is made of a material different from the base material of the visor 10. For example, the base material of the visor 10 is polycarbonate, while the coating layer forming the reflecting surface 10a is made of a material selected from SiO, $SiO_2$, $Al_2O_3$, MgO, $Ta_2O_5$, $TiO_2$ and other compounds, or a combination of two or more of those compounds. The thickness of the visor 10, which varies depending on the kind of base material, normally falls within a range from 0.1 to 10 mm.

As shown in Fig. 2B, two sets of the image display section 11 and the projection optical system 12 are respectively provided on the left and right sides corresponding to the left and right toroidally-shaped portions 10R and 10L of the visor 10. The display section and the projection optical system for the right eye ER are respectively denoted by reference signs 11R and 12R, while the display section and the projection optical system for the left eye EL are respectively denoted by reference signs 11L and 12L.

Display light containing a display image formed by the image display section 11L exits from the projection optical system 12L, and is projected onto the reflecting surface 10a of the toroidally-shaped portion 10L of the visor 10. The thereby reflected light reaches the left eye EL of the user H. Meanwhile, display light containing a display image formed by the image display section 11R exits from the projection optical system 12R, and is projected onto the reflecting surface 10a of the toroidally-shaped portion 10R of the visor 10. The thereby reflected light reaches the left eye ER of the user H. A portion of the light coming from the external world and passing through the visor 10 also reaches the eyes EL and ER of the user H. Consequently, a virtual image of the display image is created in front of the eyes of the user H, being superposed on a view of the external scene.

For convenience of explanation, the X, Y and Z axes as well as the X', Y' and Z' axes in the present embodiment are defined as follows:
As shown in Figs. 2 and 3, a central position between the left eye EL and right eye ER of the user H is defined as an origin O. An axis extending from the origin O toward the front side as viewed from the user H is defined as the Z axis. An axis orthogonal to the Z axis and directed upward as viewed from the user H is defined as the Y axis. An axis orthogonal to both the Z axis and the Y axis as well as extending in the left-outward direction as viewed from the user H is defined as the X axis. A point at which the optical axis C1 of a light beam emitted from the projection optical system 12 (12L or 12R) and reaching the visor 10 intersects with the reflecting surface 10a of the toroidally-shaped portion 10L or 10R of the visor 10 is defined as an intersection point O'. An axis extending in the direction normal to the visor 10 at the intersection point O' and directed outward as viewed from the user H is defined as the Z' axis. An axis which is orthogonal to the Z' axis and directed so as to form a Y'-Z' plane on which both the optical axis C1 of the light beam before being reflected by the visor 10 and the optical axis C2 of the light beam after the reflection are present is defined as the Y' axis. An axis which is orthogonal to both the Y' and Z' axes is defined as the X' axis. The intersection point O' is present for each of the left and right eyes EL and ER. Therefore, the system of X', Y' and Z' axes is also present for each of the left and right eyes.

In the HMD according to the present embodiment, the toroidally-shaped portions 10L and 10R of the visor 10 each have a toroidal surface shape defined by the following equation (1).
[Equation 1]

$$z = \sqrt{(Rx - Ry + \sqrt{Ry^2 - y^2})^2 - x^2} \qquad \cdots(1)$$

Since this surface is toroidal, the curvature in the Y'-axis direction at the intersection point O' is different from the curvature in the X'-axis direction. As will be described later, the former curvature is set to be smaller than the latter (i.e. the radius of curvature in the Y'-axis direction is larger than the radius of curvature in the X'-axis direction).

Although the reflecting surface of the visor 10 is a toroidal surface in this example, the reflecting surface of the visor 10 may have any shape, provided that the radius of curvature in the Y'-axis direction is larger than the radius of curvature in the X'-axis direction. For example, the reflection surface of the visor 10 may be an off-axis rotationally symmetric aspheric surface or a free-form surface.

A detailed configuration of the optical system in the HMD according to the present embodiment is hereinafter described.

The visor 10 is attached to the helmet 2 in such a manner that it is rotatable about an axis parallel with the X axis. As shown in Figs. 2A and 3, when the visor 10 is completely lowered (i.e. when in use), upper portions of the toroidally-shaped portions 10R and 10L are in an inclined position tilting frontward in front of the eyes of the user H. Its inclination angle at the intersection point O' (the angle formed by the vertical plane and the tangential plane to the reflecting surface 10a at the intersection point O') is equal to or larger than 10 degrees.

Note that the left and right axes of the visor 10 may be inclined with respect to each other (that is, the left and right Z' axes are not parallel), and a portion of a virtual image of a display image observed by the user H may be visible to only one eye.

As shown in Fig. 3, the image display section 11 includes a transmission-type display element 112, such as a transmission-type color liquid crystal display element, and a backlight illumination unit 111. The light emitted from the backlight illumination unit 111 passes through the display surface of the transmission-type display element 112, whereby an image formed on the display surface of the transmission-type display element 112 is emitted as display light. This image is completely symmetrical (i.e. plane-symmetrical with respect to the Y-Z plane). The projection optical system 12 includes a plurality of lenses 121, a back-surface reflection mirror 122 (122L or 122R) with a concave reflection surface, and a flat mirror 123. This is also completely symmetrical.

The display light emitted from the image display section 11 passes through the lenses 121 and reaches the back-surface reflection mirror 122. Then, the light is refracted at a refraction surface 122a on the incident side of the back-surface reflection mirror 122 and subsequently reaches a reflection surface 122b, to be reflected by the reflection surface 122b while being focused. The reflected light is once more reflected by the flat mirror 123 into the direction toward the reflecting surface 10a of the toroidally-shaped portion 10R or 10L of the visor 10. Due to the focusing effect of the reflection surface 122b of the back-surface reflection mirror 122, the reflected light temporarily forms an intermediate image on the optical path between the flat mirror 123 and the reflecting surface 10a. The imaging plane on which the intermediate image is formed is denoted by reference sign Q in Fig. 3. At this plane, the intermediate image is formed in both the vertical direction (i.e. in a plane parallel to the Y-Z plane) and the horizontal direction (i.e. in a plane parallel to the X-Z plane). It should be noted that the intermediate image may be formed within the projection optical system 12 including the flat mirror 123 instead of being formed on the optical path between the flat mirror 123 and the reflecting surface 10a.

As shown in Fig. 3, the optical axis of the display light emitted from the image display section 11 and incident on the lenses 121 of the projection optical system 12 is not orthogonal to the display surface of the transmission-type display element 112 of the image display section 11. In other words, the configuration of a non-coaxial optical system is adopted. Therefore, a display image which is asymmetrically blurred is formed. To address this problem, at least one of the refraction surface 122a and reflection surface 122b of the back-surface reflection mirror 122, or the lenses 121, are given an aspherical shape so as to correct the aforementioned blurring of the display image.

The display light emitted from the projection optical system 12, or more exactly, the display light which travels from the imaging plane Q of the intermediate image while gradually expanding, hits the reflecting surface 10a of the visor 10 and is reflected by the concave surface while being focused. The incident angle of the optical axis of the incident light in the Y'-Z' plane is not the same as that of the optical axis of the incident light in the X'-Z' plane. Therefore, if the reflection surface were spherical, a difference in optical power would occur between these two planes and cause astigmatism. To avoid this problem, in the HMD according to the present embodiment, the curvature of the reflecting surface 10a in the Y'-Z' plane is made to be smaller than the curvature in the X'-Z' plane by an amount corresponding to the aforementioned difference in the incident angle of the optical axis of the incident light so that the optical power will be almost equal in both planes.

Since the optical power is made to be almost equal in both the Y'-Z' plane and the X'-Z' plane, the problem of astigmatism is practically eliminated when the beams of display light respectively reach the eyes EL and ER. Accordingly, the user H can observe a display image with a wide visual field in the form of a virtual image in both the vertical and horizontal directions.

The configuration of the image display section 11 or projection optical system 12 in the HMD according to the previously described embodiment can be appropriately changed.

Figs. 4 through 6 are schematic diagrams each of which shows a different configuration example of the display section.

The image display section 11A shown in Fig. 4 includes an illumination section 11A1, a reflection-type display element 11A2 (e.g. reflection-type color liquid crystal display element), as well as a reflection-type optical element 11A3 including a beam splitter and other related components. The light emitted from the illumination section 11A1 is reflected by the reflection-type optical element 11A3 and directed toward the reflection-type display element 11A2. When reflected by the display surface of the reflection-type display element 11A2, the light receives image information formed on the display surface and is eventually emitted through the reflection-type optical element 11A3 to the outside as the display light.

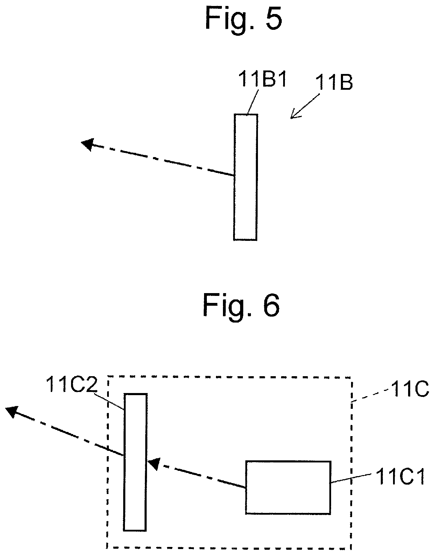

The image display section 11B shown in Fig. 5 includes a light-emitting display element 11B1, such as an organic electroluminescent display. According to this configuration, it is unnecessary to provide a separate illumination section, since the light-emitting display element 11B1 itself emits light and produces display light.

The image display section 11C shown in Fig. 6 includes a small projector 11C1 and a small screen 11C2. The display light emitted from the small projector 11C1 is projected onto the small screen 11C2 and forms an enlarged version of the display image on the small screen 11C2. The display image on this small screen 11C2 is directly emitted as the display light.

In the configuration of the previously described embodiment shown in Fig. 3, a display image which is effectively a colored image or an image with two or more colors can be created by using a monochromatic display element as the transmission-type display element 112 and a small projector emitting colored light or light with two or more colors as the backlight illumination unit 111.

The previously described embodiment is a mere example of the present invention. Its variations are not limited to the already described ones. Any change, modification or addition appropriately made within the spirit of the present invention will naturally fall within the scope of claims of the present application.

REFERENCE SIGNS LIST

| | |
|---|---|
| 2... | Helmet |
| 10... | Visor |
| 10L, 10R... | Toroidally-shaped portion |
| 10a... | Reflecting surface |
| 11A1... | Illumination section |
| 11A2, 11A3... | Reflection-type display element |
| 11B1... | Light-emitting display element |
| 11C1... | Small projector |
| 11C2... | Small screen |
| 111... | Backlight Illumination Unit |
| 112... | Transmission-Type Display Element |
| 11(11L, 11R), 11A, 11B, 11C... | Image Display Section |
| 12L, 12R... | Projection Optical System |
| 121... | Lens |
| 122... | Back-Reflection Mirror |
| 122a... | Refraction Surface |
| 122b... | Reflection Surface |
| 123... | Flat Mirror |
| H... | User |
| EL... | Left Eye |
| ER... | Right Eye |

**Claims**

**1.** A head mounted display device comprising:

a support section mounted on a head of a user;

a visor supported by the support section so as to be disposed in front of eyes of the user;

a display section that forms a display image; and

a projection optical system that projects display light containing information of the display image formed by the display section onto reflecting surfaces of the visor, wherein

a virtual image based on the display image is created so as to be superposed on a view of an external scene visible through the visor,

the reflecting surfaces of the visor are aspherical surfaces that bulge outward independently corresponding to the left and right eyes of the user and are connected to each other between the left and right eyes of the user, and

two sets of the display section and the projection optical system are respectively provided corresponding to the left and right reflecting surfaces of the visor.

2. The head mounted display device according to claim 1, wherein

an intermediate image is formed within the projection optical systems corresponding to the left and right reflecting surfaces or on optical paths from the projection optical systems to the corresponding reflecting surfaces; and

the left and right reflecting surfaces each has an aspherical shape such that curvature in a Y'-Z' plane is smaller than curvature in a X'-Z' plane,

where a central position between the left and right eyes of the user facing forward horizontally is defined as an origin O, an axis extending from the origin O toward a front side as viewed from the user is defined as a Z axis, an axis orthogonal to the Z axis and directed upward as viewed from the user is defined as a Y axis, an axis orthogonal to both the Z axis and the Y axis is defined as an X axis, and

where a point at which an optical axis of an incident light beam intersects with a corresponding one of the left and right reflecting surfaces of the visor is defined as an intersection point O', a normal to the left and right reflecting surfaces at the intersection point O' is defined as a Z' axis, an axis which is orthogonal to the Z' axis and forms a plane with the Z' axis on which plane both the optical axis of the incident light beam and an optical axis of an outgoing light beam reflected on the corresponding one of the left and right reflecting surfaces and is directed toward a corresponding eye of the user are present is defined as a Y' axis, and an axis which is orthogonal to both the Y' and Z' axes is defined as an X' axis.

3. The head mounted display device according to claim 2, wherein: the left and right reflecting surfaces each have an aspherical shape whose curvature in the Y'-Z' plane is smaller than the curvature in the X'-Z' plane by an amount corresponding to a difference in optical power due to a difference in the incident angle of the display light to the reflecting surface.

4. The head mounted display device according to claim 1, wherein: the visor has a surface layer formed on an inner surface or outer surface, the surface layer being made of a material different from a base material of the visor.

5. The head mounted display device according to claim 1, wherein: the projection optical systems respectively corresponding to the left and right reflecting surfaces each include at least one reflection mirror, and a reflecting surface of the reflection mirror has an aspherical shape.

6. The head mounted display device according to claim 5, wherein: the reflecting surface of the reflection mirror is a concave surface.

7. The head mounted display device according to claim 6, wherein: the reflection mirror is a back-surface reflection mirror having a refracting effect in addition to a reflecting effect.

8. The head mounted display device according to claim 7, wherein: the surface having the refracting effect has an aspherical shape.

9. The head mounted display device according to claim 1, wherein: the projection optical systems respectively corresponding to the left and right reflecting surfaces each include at least one lens having a refracting effect on both surfaces, and at least one surface of the lens has an aspherical shape.

10. The head mounted display device according to claim 9, wherein: the lens has a refractive index nd equal to or higher than 1.58.

11. The head mounted display device according to claim 1, wherein: the display section is configured to display information in two or more colors.

**12.** The head mounted display device according to claim 1, wherein: the display section and the projection optical system are arranged so that a principal ray corresponding to a center of a visual field of the display light emitted from the display section is emitted at an angle which is not orthogonal to the display surface of the display section.

**13.** The head mounted display device according to claim 1, wherein: the display section and the projection optical system are arranged so that a principal ray corresponding to a center of a visual field of the display light emitted from the display section is emitted from a position displaced from a center of the display surface of the display section.

**14.** The head mounted display device according to claim 1, wherein: the display section includes a transmission-type display element and a backlight illumination unit for illuminating the display element with light from behind.

**15.** The head mounted display device according to claim 1, wherein: the display section includes a reflection-type display element, an illumination section for emitting illumination light, and a reflection-type optical system configured to illuminate the display surface of the display element with the illumination light and to guide the light reflected by the display surface.

**16.** The head mounted display device according to claim 1, wherein: the display section includes a light-emitting display element.

**17.** The head mounted display device according to claim 1, wherein: the display section includes a small projector and a small screen.

**18.** The head mounted display device according to claim 17, wherein: the display section includes a transmission-type display element and a backlight illumination unit for illuminating the display element with light from behind, where at least a portion of the backlight illumination unit is a small projector.

# Fig. 1

# Fig. 2A

# Fig. 2B

# Fig. 3

# Fig. 4

Fig. 5

11B1   11B

Fig. 6

11C2   11C

11C1

# Fig. 7A

# Fig. 7B

<div align="center">

**INTERNATIONAL SEARCH REPORT**

</div>

| | International application No. |
|---|---|
| | PCT/JP2018/033872 |

**A. CLASSIFICATION OF SUBJECT MATTER**
Int. Cl. G02B27/02(2006.01)i, H04N5/64(2006.01)i

According to International Patent Classification (IPC) or to both national classification and IPC

**B. FIELDS SEARCHED**

Minimum documentation searched (classification system followed by classification symbols)
Int. Cl. G02B27/01, G02B27/02, H04N5/64

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/136393 A1 (ELBIT SYSTEMS LTD.) 12 November | 1-8, 11, 14-18 |
| Y | 2009, page 5, line 18 to page 12, line 15, fig. 1- | 9-10, 12-13 |
| | 3 (Family: none) | |
| Y | JP 2010-19874 A (SHIMADZU CORP.) 28 January 2010, paragraphs [0013]-[0017], fig. 1-4 (Family: none) | 9-10, 12-13 |
| A | JP 2008-9007 A (SHIKOKU RESEARCH INSTITUTE INC.) 17 January 2008, entire text, all drawings (Family: none) | 1-18 |

☒　Further documents are listed in the continuation of Box C.　　　☐　See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 26.11.2018 | 04.12.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2018/033872 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-520487 A (DAY & NIGHT DISPLAY SYSTEMS, LLC) 06 September 2012, entire text, all drawings & US 2009/0231722 A1 & US 2010/0315720 A1 & US 2015/0168730 A1 & WO 2010/105201 A1 & EP 2406683 A1 & SG 174341 A1 & KR 10-2011-0129467 A & IL 215118 A & CN 102449531 A & IL 244903 A | 1-18 |
| A | JP 2013-120988 A (SHIMADZU CORP.) 17 June 2013, entire text, all drawings (Family: none) | 1-18 |
| A | JP 8-262366 A (HE HOLDINGS INC. DBA HUGHES ELECTRON) 11 October 1996, entire text, all drawings & US 5677795 A & US 5835277 A & EP 722109 A1 & IL 116691 A & KR 10-0239595 B1 | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015154420 A

- JP H10504115 A